(19) **Europäisches Patentamt / European Patent Office / Office européen des brevets**

(11) **EP 2 987 770 B1**

(12) **EUROPEAN PATENT SPECIFICATION**

(45) Date of publication and mention
of the grant of the patent:
**04.09.2019 Bulletin 2019/36**

(21) Application number: **14785975.5**

(22) Date of filing: **16.04.2014**

(51) Int Cl.:
*C01B 21/082* (2006.01)  *C08F 226/02* (2006.01)
*B82Y 30/00* (2011.01)  *C01B 21/087* (2006.01)

(86) International application number:
**PCT/ES2014/070321**

(87) International publication number:
**WO 2014/170523 (23.10.2014 Gazette 2014/43)**

(54) **METHOD FOR PRODUCING POLYMER CARBON NITRIDE IN NANOSHEETS**

VERFAHREN ZUR HERSTELLUNG VON POLYMERKOHLENSTOFFNITRID IN NANOSHEETS

PROCÉDÉ DE PRODUCTION DE NITRURE DE CARBONE POLYMÈRE SOUS FORME DE NANOFEUILLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.04.2013 ES 201330569**

(43) Date of publication of application:
**24.02.2016 Bulletin 2016/08**

(73) Proprietor: **Universidad de Valladolid**
**47001 Valladolid (ES)**

(72) Inventors:
- **DANTE, Roberto Cipriano Antonio**
  **E-47001 Valladolid (ES)**
- **MARTÍN RAMOS, Pablo**
  **E-47001 Valladolid (ES)**
- **NAVAS GRACIA, Luis Manuel**
  **E-47001 Valladolid (ES)**
- **HERNÁNDEZ NAVARRO, Salvador**
  **E-47001 Valladolid (ES)**
- **PÉREZ LEBEÑA, Eduardo**
  **E-47001 Valladolid (ES)**
- **MARTÍN GIL, Jesús**
  **E-47001 Valladolid (ES)**

(74) Representative: **Ungria López, Javier**
**Avda. Ramón y Cajal, 78**
**28043 Madrid (ES)**

(56) References cited:
- HONGJIAN YAN ET AL: "Synthesis of graphitic carbon nitride by directly heating sulfuric acid treated melamine for enhanced photocatalytic Hproduction from water under visible light", INTERNATIONAL JOURNAL OF HYDROGEN ENERGY, ELSEVIER SCIENCE PUBLISHERS B.V., BARKING, GB, vol. 37, no. 1, 16 September 2011 (2011-09-16), pages 125-133, XP028348468, ISSN: 0360-3199, DOI: 10.1016/J.IJHYDENE.2011.09.072 [retrieved on 2011-10-03]
- ROBERTO C DANTE ET AL: "Synthesis of graphitic carbon nitride by reaction of melamine and uric acid", MATERIALS CHEMISTRY AND PHYSICS, ELSEVIER SA, SWITZERLAND, TAIWAN, REPUBLIC OF CHINA, vol. 130, no. 3, 21 August 2011 (2011-08-21), pages 1094-1102, XP028315960, ISSN: 0254-0584, DOI: 10.1016/J.MATCHEMPHYS.2011.08.041 [retrieved on 2011-08-26]
- BARBARA JÜRGENS ET AL: "Melem (2,5,8-Triamino-tri-s-triazine), an Important Intermediate during Condensation of Melamine Rings to Graphitic Carbon Nitride: Synthesis, Structure Determination by X-ray Powder Diffractometry, Solid-State NMR, and Theoretical Studies", JOURNAL OF THE AMERICAN CHEMICAL SOCIETY, AMERICAN CHEMICAL SOCIETY, US, vol. 125, no. 34, 2 August 2003 (2003-08-02), pages 10288-10300, XP002438613, ISSN: 0002-7863, DOI: 10.1021/JA0357689

**(Cont. next page)**

- YANG S ET AL: "GRAPHENE-BASED CARBON NITRIDE NANOSHEETS AS EFFICIENT METAL-FREE ELECTROCATALYSTS FOR OXYGEN REDUCTION REACTIONS", ANGEWANDTE CHEMIE INTERNATIONAL EDITION, WILEY - V C H VERLAG GMBH & CO. KGAA, DE, vol. 50, no. 23, 27 May 2011 (2011-05-27), pages 5339-5343, XP002734404, ISSN: 1433-7851, DOI: 10.1002/ANIE.201100170 [retrieved on 2011-05-09]
- XINCHEN WANG ET AL: "A metal-free polymeric photocatalyst for hydrogen production from water under visible light", NATURE MATERIALS, vol. 8, no. 1, 1 January 2009 (2009-01-01) , pages 76-80, XP055263770, GB ISSN: 1476-1122, DOI: 10.1038/nmat2317
- DANTE, ROBERTO C. ET AL.: 'Synthesis of crumpled nanosheets of polymeric carbon nitride from melamine cyanurate.' JOURNAL OF SOLID STATE CHEMISTRY vol. 201, May 2013, pages 153 - 163, XP055232816
- DANTE, ROBERTO C. ET AL.: 'Polymeric Carbon Nitride Nanosheets.' JOURNAL OF MACROMOLECULAR SCIENCE , PART B vol. 52, no. 4, 15 January 2013, pages 623 - 631, XP055232823
- LIU, JINGHAI ET AL.: 'Simple pyrolysis of urea into graphitic carbon nitride with recyclable adsorption and photocatalytic activity.' JOURNAL OF MATERIALS CHEMISTRY vol. 21, no. 38, 2011, pages 14398 - 14401, XP055232833
- YAN, HONGJIAN; ET AL.: 'Synthesis of graphitic carbon nitride by directly heating sulfuric acid treated melamine for enhanced photocatalytic H2 production from water under visible light.' INTERNATIONAL JOURNAL OF HYDROGEN ENERGY vol. 37, no. 1, 2012, pages 125 - 133, XP028348468

**Description**

**TECHNICAL FIELD OF THE ART**

The present invention belongs to the field of chemical processes for the synthesis of organic polymers, specifically intermediate band polymeric organic semiconductors. In this case, the polymer is obtained in a Bronsted and/or Lewis base- and acid-catalysed polycondensation reaction, in the solid phase and with production of water and reaction gases, to obtain the carbon nitride polymer known as *melon*, graphitic or polymeric carbon nitride in nanosheets.

**STATE OF THE ART**

The strong interest in carbon nitride began in 1990, when the theoretical study carried out by Liu and Cohen [Cohen, M.L. Calculation of Bulk Moduli of Diamond and Zinc-Blende Solids. Phys. Rev. B: Condens. Matter Mater. Phys 1985, 32, 7988. Liu, A.Y; Cohen, M.L. Structural properties and electronic structure of low-compressibility materials: β-Si3N4 and hypothetical β-C3/\/4. Phys. Rev. B: Condens: Matter Mater. Phys. 1990, 41, 10727] predicted that α-, β- and cubic $C_3N_4$ ($CN_x$=1.33) should have a compressibility modulus comparable to or greater than that of diamond. Melamine polymers have the correct proportion of nitrogen and carbon for being the ideal precursor for carbon nitride $CN_x$=1.33. However, the attempts to pyrolyse melamine have given rise to a wide array of hybridised materials $sp^2$ [Li, X; Zhang, J.; Shen, L.; Ma, Y.; Lei, W.; Cui, Q.; Zou, G. Preparation and characterization of graphitic carbon nitride through pyrolysis of melamine. Appl. Phys. A: Mater. Sci. Process. 2009, 94, 387. Zhao, Y.; Zheng, L.; Chu, W.; Song, L.; Zhang, Z.; Yu, D.; Tian, Y.; Xie, S.; Sun, L. Large-Scale Synthesis of Nitrogen-Rich Carbon Nitride Microfibers by Using Graphitic Carbon Nitride as Precursor. Adv. Mater. 2008, 9999, 1. Dante, r.C.; Martin Gil, J.; Pallavidino, L.; Geobaldo, F. Synthesis under Pressure of Potential Precursors of CNx Materials Based on Melamine and Phenolic Resins. Journal of Macromolecular Science, Part b. 2010, 49, 371].

Graphitic carbon nitride is considered the most promising candidate to optimise carbon materials in various potential applications. In addition to its applications as a precursor in the synthesis of superhard carbon nitride, it has also been researched for other applications, inter alia: mesoporous materials [Vinu, A.; Ariga, K.; Mori, T.; Nakanishi, T.; Hishita, S.; Goldberg, D.; Bando, Y. Preparation and Characterization of Well-Ordered Hexagonal Mesoporous Carbon Nitride. Adv. Mater. 2005, 17, 1648], layers with high tribological performance, a source of nitrogen for the synthesis of metal nitrides, a precursor for the preparation of carbon nitride nano/microstructures, as a metal-free catalyst for various "biomimetic" reactions, even the fixation and activation of $CO_2$, degradation of pollutants, decomposition of nitrogen oxides and for the activation of π bonds, aromatic systems and some Friedel-Crafts reactions, such as that described by Thomas et al. [Thomas, A.; Fischer, A.; Antonietti, M.; Müller, J.; Schlögl, R.; Carlsson, J.M. Graphitic Carbon Nitride Materials: Variation of Structure and Morphology and their Use as Metal-Free Catalysts. J. Mater. Chem. 2008, 18, 4893].

Dante et al. carried out a solid-state polycondensation using uric acid, as a cyanuric acid precursor, and melamine. Subsequently, the polycondensation reaction (see Eq. 1) was carried out directly using melamine cyanurate, melamine adduct and cyanuric acid, which crystallises in layers like graphite [Dante, R.C.; Martin-Ramos, P.; Correa-Guimaraes, A.; Martin-Gil, J. Synthesis of graphitic carbon nitride by reaction of melamine and uric acid. Mater. Chem. Phys. 2011, 130, 1094], favouring the reaction

$$C_3N_3(NH_2)_3 \bullet C_3N_3(OH)_3 \rightarrow C_6N_7(NH)NH_2) + 3H_2O \ (Eq. \ 1)$$

This reaction is triggered, for example, by sulphuric acid, which acts as a Bronsted acid catalyst, providing protons and breaking up the adduct forming complexes, i.e. acting as a Bronsted base. Analyses of melamine cyanurate pyrolysed between 450°C and 700°C reveal the formation of a polymer consisting essentially of polymeric carbon nitride, also known as *melon* or graphitic carbon nitride, with a higher degree of crystallinity and greater intertwining as the temperature increases. Also, the particles obtained between 550°C and 700°C have peculiar features as filaments, nanosheets and globules, depending on the temperature [Dante, R.C.; Martin-Ramos, P.; Navas-García, L.M.; Martin-Gil, J.; Sanchez-Arevalo, F.M.J. Macromol. Sci., Part B: Phys., 52:623-631, 2013]. In particular, the polymer obtained at temperatures of approximately 700°C exhibits intermediate band n-type semiconductor features, with a band gap of approximately 2.7-2.9 eV.

To date, the advances made have only been carried out under laboratory conditions, but a method capable of operating at industrial level is lacking. The methods presented in most of the aforementioned scientific publications are methods based on organic solvents such as benzene [Li, C.; Yang, X.; Yan, B.; Yan, Y.; Qian, Y. Synthesis and characterization of nitrogen-rich graphitic carbon nitride. Mater. Chem. Phys. 2007, 103, 427] or reagents used in the liquid or gaseous state such as cyanoamide, HN=C=NH, solids such as thiosemicarbazide, $SCH_5N_3$, which imply, in nearly all cases, an infrastructure too complex to handle them and toxic waste recycling or management systems. The simplest methods use solid-phase triazine pyrolysis. This patent application proposes a solution to this situation by providing a method which allows the industrial production of polymeric carbon nitride in nanosheets. Our method enables the solid-phase reaction, preferably using melamine cyanurate. In addition, in our method the catalyst is decomposed and, therefore, it can be recovered without need for special methods, as in the case of selenium oxide (which is sublimated and can subsequently be recovered by causing it to solidify by simple cooling). The reaction yield in our case is between 5% and 10% greater than in the other solid-phase pyrolysis methods.

## DESCRIPTION OF THE INVENTION

### Brief description of the invention

The present invention concerns the production of polymeric carbon nitride in nanosheets, which may be unrolled nanosheets, nanofilaments or globules. The present invention is defined in claim 1.

Thus, in a first aspect, the present invention relates to a method for producing polymeric carbon nitride constituted by units of the formula $C_6N_7(NH)(NH_2)$, wherein said method takes place in the solid phase and comprises:

a) obtaining a solid mixture comprising a carbon nitride precursor and at least one acid-base catalyst, and
b) treating the mixture obtained in step a) between 400°C and 800°C in an inert gas atmosphere, said method being characterised in that step b) is carried out in a closed system when the internal pressure of the system is between a threshold input pressure ($p_{ei}$) and a threshold output pressure ($p_{si}$), and in an open system when the internal pressure is outside of the aforementioned interval.

Nanosheets are the product obtained from 500°C. Depending on the synthesis temperature, they can take on different forms: between 600°C and 650°C they tend to take on rolled forms to create nanofilaments of nanometric thickness and variable length; and at approximately 700°C they tend to shrink to form globules. Globules can be particularly useful as catalysts due to their greater specific surface area, while rolled-up tubes can be used as polymer reinforcements. They can all have special applications such as semiconductors in photocatalysis and electronics.

Likewise, the present invention also relates to the versatile use of the products obtained by the method of the invention in various applications, for example in electronics as intermediate band semiconductors, in renewable energies for photovoltaic cells as *n*-type semiconductors, in composite materials as a reinforcement and flame retardant and even as a solid lubricant.

### Detailed description of the invention

In a first aspect, the present invention provides a method for producing polymeric carbon nitride formed by units of the formula $C_6N_7(NH)(NH_2)$, wherein said method takes place in the solid phase and comprises:

a) obtaining a solid mixture comprising a carbon nitride precursor and at least one acid-base catalyst, and
b) treating the mixture obtained in step a) between 400°C and 800°C in an inert gas atmosphere, said method being characterised in that step b) is carried out in a closed system when the internal pressure of the system is between a threshold input pressure ($p_{ei}$) and a threshold output pressure ($p_{si}$), and in an open system when the internal pressure is outside of the aforementioned interval. Preferably, $p_{ei}$ is greater than 1 atm, more preferably between 1.0 and 1.5 atm. In addition, $p_{ext}$ is a value between 1.2 and 1.7. Also preferably, $p_{si}$ will be a value between 1.5 and 3 atm.

In the present invention, "closed system" is understood to be the reaction chamber of the reactor, wherein step b) of the method of the invention takes place in a configuration that does not allow the inflow and outflow of gases. Likewise, it is understood that the system is a closed system when the internal pressure is greater than the threshold input pressure ($p_{ei}$) and less than the threshold output pressure ($p_{si}$).

On the other side, "open system" is understood to be the reaction chamber of the reactor, wherein step b) of the method of the invention takes place in a configuration which allows the inflow of an inert gas at an external pressure ($p_{ext}$) when the internal pressure of the system is less than the threshold input pressure ($p_{ei}$); or allows the outflow of gases when the internal pressure of the system is greater than the threshold output pressure ($p_{si}$).

The method for producing polymeric carbon nitride of the present invention makes it possible to maintain the volatile polymer fragments, mainly heptazine, in the reaction medium for as long as possible, i.e. until the pressure exceeds the established threshold output value. This prevents these reactive fragments from escaping from the reaction atmosphere and, thus, decreasing the method yield. In non-yield-linked laboratory trials, an aspect of particular importance to an industrial method, researchers do not take said aspect into account and a reactor which enables the necessary change in configuration for the method of the invention to take place is not manufactured *ad hoc.*

Likewise, the method of the present invention also allows the outflow of decomposition gases. Most of these gases are water, although in the initial phases of the reaction, decomposition or catalyst sublimation vapours are also released, in addition to traces of ammonia, heptazine fragments and carbon dioxide.

The method of the present invention makes it possible to obtain a higher yield with respect to the same method with free gas flow. In fact, reaction yield is increased by means of this system, from approximately 10% by mass, obtainable with free gas flow, to up to 20%-30% by mass between 600°C-700°C.

Step b) of the polycondensation takes place in an inert gas atmosphere, for example, nitrogen, helium, argon or other noble gases.

To this end, prior to the start of the reaction, an air expulsion method that uses an inert gas such as nitrogen will be carried out, for example alternating periods wherein $p_{ext}$ is greater and lesser than $p_{ei}$ or $p_{si}$, using the inflow and outflow valve or valves of the reactor such that the flow generated expels the air initially present in the system. Subsequently, the inert gas pressure ($p_{ext}$) is regulated in the oven wherein the reactor is disposed to the value established for step b) of the method of the invention.

In a preferred embodiment, in the method for producing polymeric carbon nitride as described in this patent application, the threshold output pressure ($p_{si}$) is greater than the external inert gas pressure ($p_{ext}$) and this external pressure ($p_{ext}$) is equal to or greater than the threshold input pressure ($p_{ei}$). This system enables the regulation of the inflow and outflow of gases therethrough.

The reactor, preferably an appropriate reactor for operating at industrial scale, which comprises the reaction chamber where step b) of the method of the present invention takes place, may have one or more valves which allow the regulation of gas inflow and/or outflow, when said chamber is configured as an open system.

Therefore, this reactor may comprise at least one inert gas inflow valve for allowing inert gas inflow when the internal pressure of the system is less than the threshold input pressure ($p_{ei}$), and at least one outflow valve to allow gas outflow when the internal pressure of the system is greater than the threshold output pressure ($p_{si}$).

In addition, a single valve may also be used for reactor gas inflow and outflow. In this case, when the internal pressure ($p_i$) is greater than the threshold output pressure ($p_{si}$) and external pressure ($p_{ext}$), the gas flows out of the reactor through the unique valve. Furthermore, when the external pressure ($p_{ext}$) is greater than the threshold input pressure ($p_{ei}$) and the internal pressure ($p_i$), the inert gas comes into the reactor through the unique valve.

In another preferred embodiment, in the method for producing polymeric carbon nitride as described herein, the solid precursor is selected from the group consisting of melamine cyanurate and a mixture of uric acid with triazines or tris-s-triazines, preferably melamine or heptazine. In an even more preferred embodiment, the solid precursor is selected from the group consisting of melamine cyanurate and a mixture of uric acid with melamine.

In another even more preferred embodiment, the solid precursor is powder with a particle size of less than 80 μm.

In another particularly preferred embodiment, the precursor is melamine cyanurate (CAS No. 37640-57-6), a stable melamine-cyanuric acid adduct. This compound is the ideal precursor for synthesising the polymeric carbon nitride, preferably in nanosheets, since it has a graphite-like layered structure as the end product. In addition, this compound is a solid, which greatly facilitates the production process since there is no need for the participation of other solvents in the synthesis phase. Melamine cyanurate is a white-coloured solid which can easily be ground to particle sizes of less than 80 μm, with the preferred maximum size being 45 μm.

Other precursors, on their own or combined, may also be used, such as uric acid with melamine. However, in these cases the formation of polymeric carbon nitride in nanosheets is less efficient.

In the method for producing polymeric carbon nitride of the present invention, the catalyst acts firstly as an acid and subsequently as a Bronsted or Lewis base, whether in the solid phase or dissolved in a liquid. However, when the catalyst is used dissolved in a liquid, the method of the invention comprises drying said catalyst before step b).

Preferably, the catalyst used is capable of sublimating or decomposing without leaving traces under the reaction conditions of step b) of the method.

In the event of using melamine cyanurate as a precursor, the effect of the catalyst is to firstly break up the melamine cyanurate adduct, forming very extensive compounds, which can be reconducted between Bronsted acid-base reactions.

In another preferred embodiment, in the method for producing polymeric carbon nitride as described herein, the catalyst is selected from the group consisting of sulphuric acid, selenium oxide, elemental sulphur, sulphonates and combinations thereof in different proportions.

In fact, sulphur, selenium and oxygen (which belong to Group VI of the periodic table of elements) have Brønsted base characteristics in the compounds chosen as catalysts. In the case of sulphuric acid, the protons act breaking up the melamine cyanurate adduct when used as a precursor, while in the case of selenium oxide, due to being a highly reactive polymer, it breaks up and reacts forming $SeO_3^{2-}$ ions. Both catalysts act forming complexes with the carbon nitride precursor, thereby preventing its sublimation, which would occur at temperatures lower than carbon nitride formation temperatures.

In another preferred embodiment, step a) comprised in the method for producing polymeric carbon nitride as described herein, comprises:

a-1) mixing a solid precursor, preferably melamine cyanurate, with at least one solid catalyst for obtaining a solid mixture which comprises the carbon nitride precursor with the catalyst.

In another preferred embodiment, step a) comprised in the method for producing polymeric carbon nitride as described herein, additionally comprises:

a-1) mixing a solid precursor, preferably melamine cyanurate, with at least one acid-base catalyst dissolved in a liquid,
a-2) letting the solid-liquid mixture obtained in step a-1) settle,
a-3) separating the solid from the settled mixture obtained in step a-2), and
a-4) drying the solid separated in step a-3) to obtain a solid mixture that comprises a carbon nitride precursor with the catalyst.

In an even more preferred embodiment, step a) comprises:

a-1) mixing solid melamine cyanurate with at least one acid-base catalyst dissolved in a liquid,
a-2) letting the solid-liquid mixture obtained in step a-1) settle between 1 and 12 hours, more preferably between 1 and 3 hours,
a-3) filtering or centrifuging the settled mixture obtained in step a-2), and
a-4) drying the wet solid separated in step a-3) until obtaining a solvent content, preferably water, less than 2% by weight.

Although the catalyst will preferably be dissolved in water, it may also be dissolved in other solvents, whether organic or ionic organic solvents.

In another even more preferred embodiment, the acid-base catalyst is an aqueous sulphuric acid solution. This catalyst is decomposed into gaseous products during the thermal treatment in step b) and is expelled from the reactor when the internal pressure exceeds the threshold output pressure ($p_{si}$).

In a particularly preferred embodiment, in the method for producing carbon nitride as described herein, step a) comprises:

a-1) mixing a solid precursor, preferably melamine cyanurate, by means of impregnation with a 0.1 to 10M aqueous sulphuric acid solution,
a-2) letting the solid-liquid mixture obtained in step a-1) settle between 1 and 12 hours, preferably between 1 and 3 hours.
a-3) filtering or centrifuging the solid from the settled mixture obtained in step a-2), and
a-4) drying the solid separated in step a-3) between 60°C and 120°C to obtain a solid mixture that comprises a carbon nitride precursor with sulphuric acid.

In another even more preferred embodiment, the catalyst is SeO$_2$ (CAS No. 7446-08-4). This compound is solid and sublimates during the thermal treatment of step b) and is expelled from the reactor when the internal pressure exceeds the threshold output pressure ($p_{si}$).

In a particularly preferred embodiment, the precursor:SeO$_2$ proportion in the initial mixture of step b) ranges from 200:1 to 15:1. More preferably, this proportion ranges from 100:1 to 15:1.

In another even more preferred embodiment, the catalyst is a combination of sulphuric acid and selenium dioxide. Preferably, in this case the method of the present invention comprises step a-1) to a-4), as described previously. In addition, the precursor:SeO$_2$ proportion in the initial mixture of step b) also preferably ranges from 200:1 to 15:1, more preferably from 100:1 to 15:1.

In another preferred embodiment, step b) of the method for producing polymeric carbon nitride as described herein comprises:

b-1) gradually increasing the temperature, preferably at a speed of between 5°C and 20°C/min, up to a final temperature between 400°C and 800°C, preferably between 450°C and 700°C, and
b-2) maintaining the final temperature between 30 and 200 min, preferably between 30 and 120 min.

Polymeric carbon nitride is obtained in nanosheets at temperatures greater than 500°C. However, the thickness of the nanosheets changes in accordance with the final temperature of stage b) of the method, which are increasingly thinner until nearly forming monolayers as the temperature increases. In another preferred embodiment, the polymeric carbon nitride of the present invention takes place in a selected manner from the group consisting of unrolled nanosheets, nanofilaments and globules. The final temperature is established in accordance with the form of the polymeric carbon nitride to be obtained. Preferably, the final temperature is maintained between 500°C and 550°C to obtain unrolled nanosheets, between 600°C and 650°C to obtain nanofilaments or tubes, i.e. rolled nanosheets of nanometric thickness, and is maintained at a temperature equal to or greater than 700°C to obtain globules.

As mentioned above, the present invention provides an enhanced method for producing polymeric carbon nitride nanosheets, with the formula $C_6N_7(NH)(NH_2)$, on enabling industrial production thereof, with a higher yield to that obtained by other methods based on free gas flow.

The polymeric carbon nitride obtained by means of the method of the present invention may achieve purity in excess of 99%.

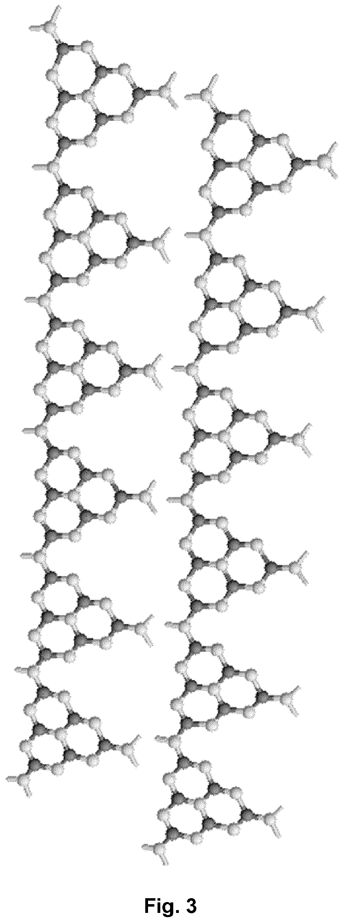

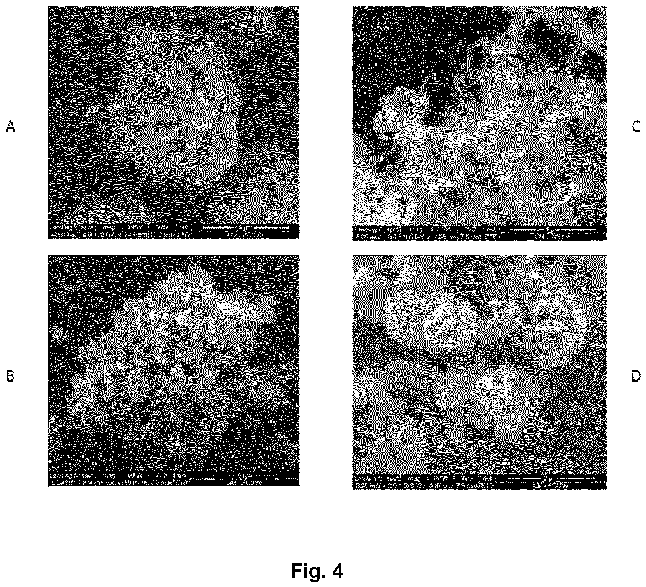

The structure of the polymer is shown in figure 3, wherein the heptazine $C_6N_7$ rings can be observed, the ordered polymer chains and two "graphene" layers thereof. The type of products varies, as shown in figure 4, particularly in accordance with the temperature at which step b) of the method takes place, passing from "desert rose" type particles to nanosheets, filaments and globules at 700°C.

In a second aspect, the present invention also relates to the use of polymeric carbon nitride obtained by means of the method described herein in electronics, as a semiconductor in photovoltaic cells, as a flame retardant, as reinforcement in materials composed of a polymeric matrix and as a solid lubricant.

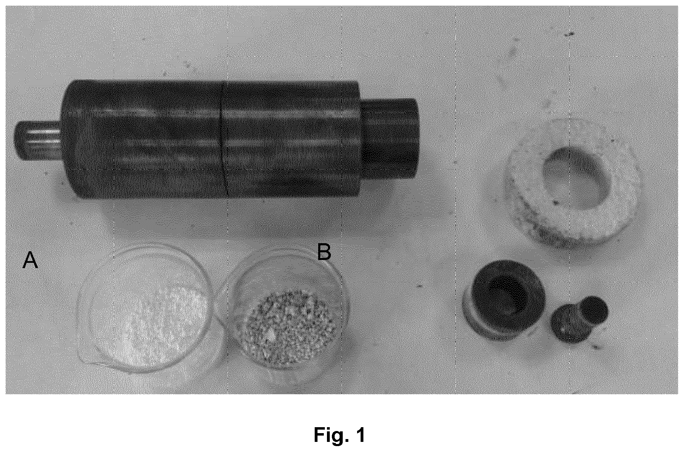

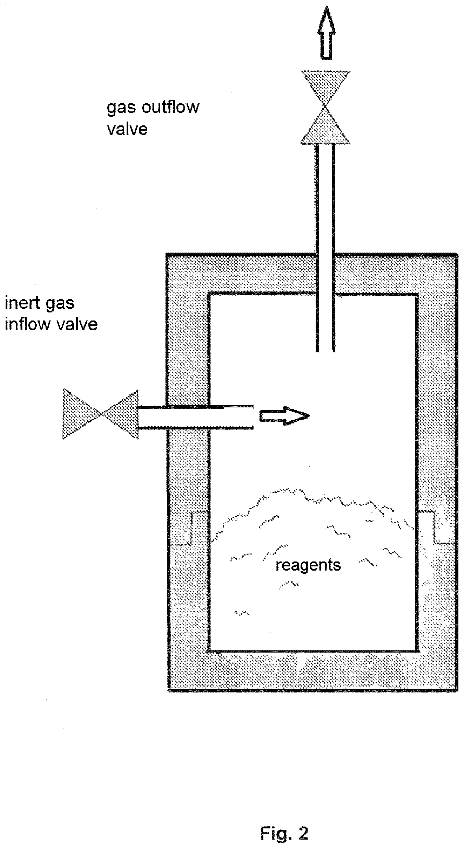

The reactor which comprises the reaction chamber wherein step b) of the method of the present invention takes place may preferably be manufactured from AISI 310 stainless steel, in order to support repeated heating and cooling cycles, in addition to resisting the attack of corrosive agents produced in the decomposition of the reactive mixture. A photo of the small-scale reactor prototype is shown in figure 1. In addition, figure 2 shows a schematic cross-sectional view of the reactor showing its preferable industrial-scale characteristics.

The oven wherein the reactor is inserted may be of different heating types: convection or infrared or combination; preferable containing a sufficiently large cavity to guarantee inert gas flow, for example nitrogen, and efficient oven heating.

**BRIEF DESCRIPTION OF THE DRAWINGS**

Figure 1 shows a reactor prototype having a single valve. The beaker on the left (A) contains the reagent: melamine cyanurate (CNM); the beaker on the right contains the carbon nitride nanosheet product (nanosheets).
Figure 2 shows a schematic cross-sectional view of an industrial reactor having two valves for the production of polymeric carbon nitride.
Figure 3 shows a view of polymeric carbon nitride chains.
Figure 4 shows scanning electron micrographs of the polymeric carbon nitride obtained at different temperatures: A) 450°C: desert rose type, B) 550°C: unrolled nanosheets, c) 650°C: rolled nanosheets, D) 700°C: globules.
Figure 5 shows a drawing of an industrial-scale reactor. Valve V1: inert gas inflow, valve V2: reactor gas outflow.

**EXAMPLES OF EMBODIMENT OF THE INVENTION**

Following is a description, by way of non-limiting example, of specific embodiments of the invention showing the preferred methods for producing polymeric carbon nitride nanosheets.

**Example 1. Preparation of polymeric carbon nitride nanosheets using melamine cyanurate and a sulphuric acid catalyst at 600°C.**

A quantity of 27.1 g of solid white melamine cyanurate was mixed with 30 ml of 1M aqueous sulphuric acid solution and the mixture was left to settle for 12 hours. The mixture was filtered and the wet mass was placed in a drying oven for 24 hours at 120°C. The reactive solid mixture was placed in a reactor with a valve for the inflow and outflow of excess gases, as described previously and shown in figure 1, and was treated in an oven with nitrogen flow with a rising gradient of 20°C/min at a final temperature of 600°C, which was maintained for 40 minutes.

The external inert gas pressure $p_{ext}$ and threshold input pressure $p_{ei}$ was 1.2 atm, with a threshold output pressure $p_{si}$ of 1.5 atm. At the end of the treatment time, the mixture was allowed to cool spontaneously under a nitrogen flow. A quantity of 6.3 g of polymeric carbon nitride in whitish nanosheets and volume of 33 mL was obtained. Reaction yield was 23.2% by weight.

In the final product there are no traces of sulphur, having been fully transformed into gaseous sulphur oxide at reaction temperatures.

**Example 2. Preparation of polymeric carbon nitride nanosheets using melamine cyanurate and a sulphuric acid catalyst at 700°C.**

The same procedure of Example 1 was repeated but the final temperature was 700°C. Under these conditions, a product formed as nanosheet globules with a yield of 12.3% was obtained.

**Example 3. Preparation of polymeric carbon nitride nanosheets using melamine cyanurate and a selenium oxide catalyst.**

Selenium oxide with the formula $SeO_2$ is a polymeric oxide, has a Bronsted base nature and is adequate for our method because, as sublimates at 350°C, it does not leave impurities in the final product.
A quantity of 20 g of melamine cyanurate and 200 mg of selenium oxide were mixed in a precursor:catalyst proportion of 100:1, the procedure was carried out under the same thermal treatment and reactor conditions as Example 1 and 4.4 g of final product were obtained with efficiency yield of 22% by weight.

**Example 4.** The procedure of Example 1 was carried out, but using uric acid and melamine as a reagent. A final yield of 15% of polymeric carbon nitride was obtained in unrolled nanosheets.

**Example 5.** The procedure of example 1 was carried out, but using a combination of a 0.5 M sulphuric acid solution and 100 mg of selenium oxide as a catalyst. Polymeric carbon nitride in unrolled nanosheets with a yield of approximately 25% by weight was obtained.

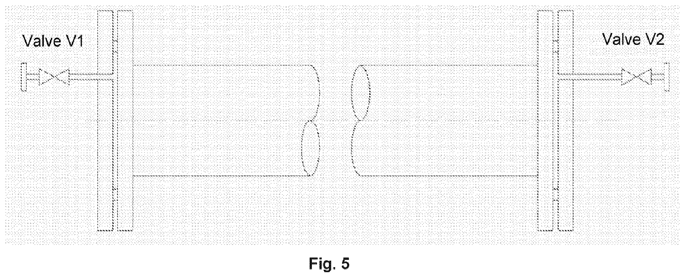

**Example 6.** The product can be produced at industrial scale, under the operating conditions of Example 1, using a reactor that follows the diagram of figure 2 and the drawing of which is shown in figure 5, which can contain 100 kg of reagent already treated with the catalyst. At the end of the reaction, the cylindrical reactor opens in a longitudinal direction, towards the middle, to facilitate the extraction of the product, approximately 20-25 kg.

**Claims**

1. A method for producing polymeric carbon nitride formed by units of the formula $C_6N_7(NH)(NH_2)$, wherein said process takes place in the solid phase and comprises:

   a) obtaining a solid mixture comprising a carbon nitride precursor and at least one acid-base catalyst, and
   b) treating the mixture obtained in step a) between 400°C and 800°C in an inert gas atmosphere, wherein the method is **characterised in that**:

      - step b) is carried out in a system having a configuration that,

         i) if the internal pressure of the system is between a threshold input pressure ($p_{ei}$) and a threshold output pressure ($p_{si}$), does not allow the inflow and outflow of gases;
         ii) if the internal pressure of the system is lower than the threshold input pressure ($p_{ei}$), allows the inflow of an inert gas at an external pressure ($p_{ext}$); and
         iii) if the internal pressure of the system is greater than the threshold output pressure ($p_{si}$), allows the outflow of gases;

      wherein the threshold input pressure ($p_{ei}$) is between 1.0 and 1.5 atm, the external pressure ($p_{ext}$) is between 1.2 and 1.7 atm, and the threshold output pressure ($p_{si}$) is between 1.5 and 3 atm.

2. The method for producing polymeric carbon nitride according to claim 1, wherein the threshold output pressure ($p_{si}$) is greater than the external pressure ($p_{ext}$) of inert gas and this external pressure ($p_{ext}$) is equal to or greater than the threshold input pressure ($p_{ei}$).

3. The method for producing polymeric carbon nitride according to any one of claims 1 or 2, wherein the solid precursor is selected from the group consisting of melamine cyanurate and a mixture of uric acid and melamine.

4. The method for producing polymeric carbon nitride according to claim 3, wherein the solid precursor is melamine cyanurate.

**5.** The method for producing polymeric carbon nitride according to any one of claims 1 to 4, wherein the acid-base catalyst is selected from the group consisting of sulphuric acid, selenium oxide, elemental sulphur, sulphonates and a combination thereof.

**6.** The method for producing polymeric carbon nitride according to any one of claims 1 to 5, wherein step a) comprises:

a-1) mixing a solid precursor with at least one acid-base catalyst dissolved in a liquid,
a-2) letting the solid-liquid mixture obtained in step a-1) settle,
a-3) separating the solid from the settled mixture obtained in step a-2), and
a-4) drying the solid separated in step a-3) for obtaining a solid mixture that comprises a carbon nitride precursor with the catalyst.

**7.** The method for producing polymeric carbon nitride according to claim 6, wherein the acid-base catalyst is an aqueous sulphuric acid solution.

**8.** The method for producing polymeric carbon nitride according to claim 7, wherein step a) comprises:

a-1) mixing, by means of impregnation, a solid precursor with a 0.1 to 1M aqueous sulphuric acid solution,
a-2) letting the solid-liquid mixture obtained in step a-1) settle,
a-3) filtering or centrifuging the solid from the settled mixture obtained in step a-2), and
a-4) drying the solid separated in step a-3) between 60°C and 120°C to obtain a solid mixture comprising a carbon nitride precursor with sulphuric acid.

**9.** The method for producing polymeric carbon nitride according to claim 5, wherein the acid-base catalyst is $SeO_2$.

**10.** The method for producing polymeric carbon nitride according to claim 9, wherein the precursor:$SeO_2$ proportion ranges from 200:1 to 15:1.

**11.** The method for producing polymeric carbon nitride according to any one of claims 5 to 10, wherein the process takes place in the presence of a combination of sulphuric acid and selenium oxide.

**12.** The method for producing polymeric carbon nitride according to any one of claims 1 to 11, wherein step b) comprises:

b-1) increasing the temperature at a rate between 5°C and 20°C/min up to a final temperature between 400°C and 800°C, and
b-2) maintaining the final temperature between 30 and 200 min.

**Patentansprüche**

**1.** Verfahren zur Herstellung von polymeren Kohlenstoffnitrid, gebildet durch Einheiten der Formel $C_6N_7(NH)(NH_2)$, wobei das Verfahren in der festen Phase stattfindet und umfasst:

a) Erhalten einer festen Mischung umfassend einen Kohlenstoffnitrid-Vorläufer und wenigstens einen Säure-Base-Katalysator, und
b) Behandeln der in Schritt a) erhaltenen Mischung zwischen 400 °C und 800 °C in einer Inertgasatmosphäre, wobei das Verfahren **dadurch gekennzeichnet ist, dass**

- Schritt b) in einem System mit einer Konfiguration durchgeführt wird, das

i) wenn der Innendruck des Systems zwischen einem Schwelleneingangsdruck ($p_{ei}$) und einem Schwellenausgangsdruck ($p_{si}$) liegt, das Einströmen und Ausströmen von Gasen nicht erlaubt;
ii) wenn der Innendruck des Systems niedriger ist als der Schwelleneingangsdruck ($p_{ei}$), das Einströmen eines Inertgases bei einem Außendruck ($p_{ext}$) erlaubt; und
iii) wenn der Innendruck des Systems größer ist als der Schwellenausgangsdruck ($p_{si}$), das Ausströmen von Gasen erlaubt;

wobei der Schwelleneingangsdruck ($p_{ei}$) zwischen 1,0 und 1,5 atm liegt, der Außendruck ($p_{ext}$) zwischen

1,2 und 1,7 atm liegt und der Schwellenausgangsdruck ($p_{si}$) zwischen 1,5 und 3 atm liegt.

2. Verfahren zur Herstellung von polymeren Kohlenstoffnitrid nach Anspruch 1, wobei der Schwellenausgangsdruck ($p_{si}$) größer ist als der Außendruck ($p_{ext}$) des Inertgases und dieser Außendruck ($p_{ext}$) gleich oder größer ist als der Schwelleneingangsdruck ($p_{ei}$).

3. Verfahren zur Herstellung von polymeren Kohlenstoffnitrid nach einem der Ansprüche 1 oder 2, wobei der feste Vorläufer ausgewählt ist, aus der Gruppe bestehend aus Melamicyanurat und einer Mischung aus Harnsäure und Melamin

4. Verfahren zur Herstellung von polymeren Kohlenstoffnitrid nach Anspruch 3, wobei der feste Vorläufer Melamincyanurat ist.

5. Verfahren zur Herstellung von polymeren Kohlenstoffnitrid nach einem der Ansprüche 1 bis 4, wobei der Säure-Base-Katalysator ausgewählt ist aus der Gruppe, bestehend aus Schwefelsäure, Selenoxid, elementarem Schwefel, Sulfonaten und einer Kombination dieser.

6. Verfahren zur Herstellung von polymeren Kohlenstoffnitrid nach einem der Ansprüche 1 bis 5, wobei Schritt a) umfasst:

   a-1) Mischen eines festen Vorläufers mit wenigstens einem Säure-Base-Katalysator, der in einer Flüssigkeit gelöst ist,
   a-2) Absetzen lassen der in Schritt a-1) erhaltenen Fest-Flüssig-Mischung,
   a-3) Abtrennen des Feststoffs aus der abgesetzten Mischung, die in Schritt a-2) erhalten wurde, und
   a-4) Trocknen des in Schritt a-3) abgetrennten Feststoffs, um eine feste Mischung zu erhalten, die einen Kohlenstoffnitrid-Vorläufer mit dem Katalysator umfasst.

7. Verfahren zur Herstellung von polymeren Kohlenstoffnitrid nach Anspruch 6, wobei der Säure-Base-Katalysator eine wässrige Schwefelsäurelösung ist.

8. Verfahren zur Herstellung von polymeren Kohlenstoffnitrid nach Anspruch 7, wobei Schritt a) umfasst:

   a-1) Mischen, durch Imprägnierung, eines festen Vorläufers mit einer 0,1 bis 1 M wässrigen Schwefelsäurelösung,
   a-2) Absetzen lassen der in Schritt a-1) erhaltenen Fest-Flüssig-Mischung,
   a-3) Filtern oder Zentrifugieren des Feststoffs aus der abgesetzten Mischung, die in Schritt a-2) erhalten wurde, und
   a-4) Trocknen des in Schritt a-3) abgetrennten Feststoffs zwischen 60 °C und 120 °C, um eine feste Mischung zu erhalten, die einen Kohlenstoffnitrid-Vorläufer mit Schwefelsäure umfasst.

9. Verfahren zur Herstellung von polymeren Kohlenstoffnitrid nach Anspruch 5, wobei der Säure-Base-Katalysator $SeO_2$ ist.

10. Verfahren zur Herstellung von polymeren Kohlenstoffnitrid nach Anspruch 9, wobei das Vorläufer: $SeO_2$-Verhältnis in dem Bereich von 200:1 zu 15:1 liegt.

11. Verfahren zur Herstellung von polymeren Kohlenstoffnitrid nach einem der Ansprüche 5 bis 10, wobei das Verfahren in der Anwesenheit einer Kombination aus Schwefelsäure und Selenoxid stattfindet.

12. Verfahren zur Herstellung von polymeren Kohlenstoffnitrid nach einem der Ansprüche 1 bis 11, wobei der Schritt b) umfasst:

   b-1) Erhöhen der Temperatur mit einer Geschwindigkeit zwischen 5 °C und 20 °C/min bis zu einer Endtemperatur zwischen 400 °C und 800 °C, und
   b-2) Halten der Endtemperatur zwischen 30 und 200 Minuten.

**Revendications**

1. Un procédé de production de nitrure de carbone polymère formé par des unités de formule $C_6N_7(NH)(NH_2)$, ledit procédé étant mis en oeuvre en phase solide et comprenant :

   a) le fait d'obtenir un mélange solide comprenant un précurseur de nitrure de carbone et au moins un catalyseur acide-base, et

   b) le fait de traiter le mélange obtenu à l'étape a) entre 400°C et 800°C dans une atmosphère de gaz inerte, le procédé étant **caractérisé en ce que** :

   - l'étape b) est mise en oeuvre dans un système ayant une configuration qui,

   i) si la pression interne du système se situe entre une pression seuil d'entrée ($p_{ei}$) et une pression seuil de sortie ($p_{si}$), ne permet pas l'entrée et la sortie des gaz ;
   ii) si la pression interne du système est inférieure à la pression seuil d'entrée ($p_{ei}$), permet l'entrée d'un gaz inerte à une pression externe ($p_{ext}$) ; et
   iii) si la pression interne du système est supérieure à la pression seuil de sortie ($p_{si}$), permet la sortie des gaz ;

   la pression seuil d'entrée ($p_{ei}$ ;) est comprise entre 1,0 et 1,5 atm, la pression externe ($p_{ext}$) est comprise entre 1,2 et 1,7 atm et la pression seuil de sortie ($p_{si}$) est comprise entre 1,5 et 3 atm.

2. Le procédé de production de nitrure de carbone polymère selon la revendication 1, dans lequel la pression seuil de sortie ($p_{si}$ ;) est supérieure à la pression externe ($p_{ext}$) du gaz inerte et cette pression externe ($p_{ext}$) est égale ou supérieure à la pression seuil d'entrée ($p_{ei}$).

3. Le procédé de production de nitrure de carbone polymère selon l'une quelconque des revendications 1 ou 2, dans lequel le précurseur solide est choisi dans le groupe constitué par le cyanurate de mélamine et un mélange d'acide urique et de mélamine.

4. Le procédé de production de nitrure de carbone polymère selon la revendication 3, dans lequel le précurseur solide est le cyanurate de mélamine.

5. Le procédé de production de nitrure de carbone polymère selon l'une quelconque des revendications 1 à 4, dans lequel le catalyseur acide-base est choisi dans le groupe consistant en l'acide sulfurique, l'oxyde de sélénium, le soufre élémentaire, des sulfonates et une combinaison de ceux-ci.

6. Le procédé de production de nitrure de carbone polymère selon l'une quelconque des revendications 1 à 5, dans lequel l'étape a) comprend :

   a-1) mélanger un précurseur solide avec au moins un catalyseur acide-base dissous dans un liquide,
   a-2) laisser décanter le mélange solide-liquide obtenu à l'étape a-1),
   a-3) séparer le solide du mélange décanté obtenu à l'étape a-2), et
   a-4) sécher le solide séparé à l'étape a-3) pour obtenir un mélange solide qui comprend un précurseur de nitrure de carbone avec le catalyseur.

7. Le procédé de production de nitrure de carbone polymère selon la revendication 6, dans lequel le catalyseur acide-base est une solution aqueuse d'acide sulfurique.

8. Le procédé de production de nitrure de carbone polymère selon la revendication 7, dans lequel l'étape a) comprend :

   a-1) mélanger, par imprégnation, un précurseur solide avec une solution aqueuse d'acide sulfurique à 0,1 à 1 M,
   a-2) laisser décanter le mélange solide-liquide obtenu à l'étape a-1),
   a-3) filtrer ou centrifuger le solide du mélange décanté obtenu à l'étape a-2), et
   a-4) sécher le solide séparé à l'étape a-3) entre 60°C et 120°C pour obtenir un mélange solide comprenant un précurseur de nitrure de carbone avec de l'acide sulfurique.

9. Le procédé de production de nitrure de carbone polymère selon la revendication 5, dans lequel le catalyseur acide-

base est le $SeO_2$.

**10.** Le procédé de production de nitrure de carbone polymère selon la revendication 9, dans lequel la proportion précurseur:$SeO_2$ est comprise entre 200:1 et 15:1.

**11.** Le procédé de production de nitrure de carbone polymère selon l'une quelconque des revendications 5 à 10, dans lequel le procédé est mis en oeuvre en présence d'une combinaison d'acide sulfurique et d'oxyde de sélénium.

**12.** Le procédé de production de nitrure de carbone polymère selon l'une quelconque des revendications 1 à 11, dans lequel l'étape b) comprend :

b-1) le fait d'augmenter la température selon un taux compris entre 5°C et 20°C/min jusqu'à une température finale comprise entre 400°C et 800°C, et
b-2) le fait de maintenir la température finale entre 30 et 200 minutes.

**Fig. 1**

gas outflow
valve

inert gas
inflow valve

reagents

Fig. 2

**Fig. 3**

**Fig. 4**

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **COHEN, M.L.** Calculation of Bulk Moduli of Diamond and Zinc-Blende Solids. *Phys. Rev. B: Condens. Matter Mater. Phys,* 1985, vol. 32, 7988
- **LIU, A.Y ; COHEN, M.L.** Structural properties and electronic structure of low-compressibility materials: $\beta$-Si3N4 and hypothetical $\beta$-C3$\Lambda$. *Phys. Rev. B: Condens: Matter Mater. Phys.,* 1990, vol. 41, 10727
- **LI, X ; ZHANG, J. ; SHEN, L. ; MA, Y. ; LEI, W. ; CUI, Q. ; ZOU, G.** Preparation and characterization of graphitic carbon nitride through pyrolysis of melamine. *Appl. Phys. A: Mater. Sci. Process.,* 2009, vol. 94, 387
- **ZHAO, Y. ; ZHENG, L. ; CHU, W. ; SONG, L. ; ZHANG, Z. ; YU, D. ; TIAN, Y. ; XIE, S. ; SUN, L.** Large-Scale Synthesis of Nitrogen-Rich Carbon Nitride Microfibers by Using Graphitic Carbon Nitride as Precursor. *Adv. Mater.,* 2008, vol. 9999, 1
- **DANTE, R.C. ; MARTIN GIL, J. ; PALLAVIDINO, L. ; GEOBALDO, F.** Synthesis under Pressure of Potential Precursors of CNx Materials Based on Melamine and Phenolic Resins. *Journal of Macromolecular Science,* 2010, vol. 49, 371

- **VINU, A. ; ARIGA, K. ; MORI, T. ; NAKANISHI, T. ; HISHITA, S. ; GOLDBERG, D. ; BANDO, Y.** Preparation and Characterization of Well-Ordered Hexagonal Mesoporous Carbon Nitride. *Adv. Mater.,* 2005, vol. 17, 1648
- **THOMAS, A. ; FISCHER, A. ; ANTONIETTI, M. ; MÜLLER, J. ; SCHLÖGL, R. ; CARLSSON, J.M.** Graphitic Carbon Nitride Materials: Variation of Structure and Morphology and their Use as Metal-Free Catalysts. *J. Mater. Chem.,* 2008, vol. 18, 4893
- **DANTE, R.C. ; MARTIN-RAMOS, P. ; CORREA-GUIMARAES, A. ; MARTIN-GIL, J.** Synthesis of graphitic carbon nitride by reaction of melamine and uric acid. *Mater. Chem. Phys.,* 2011, vol. 130, 1094
- **DANTE, R.C. ; MARTIN-RAMOS, P. ; NAVAS-GARCÍA, L.M. ; MARTIN-GIL, J. ; SANCHEZ-AREVALO.** *F.M.J. Macromol. Sci., Part B: Phys.,* 2013, vol. 52, 623-631
- **LI, C. ; YANG, X. ; YAN, B. ; YAN, Y. ; QIAN, Y.** Synthesis and characterization of nitrogen-rich graphitic carbon nitride. *Mater. Chem. Phys.,* 2007, vol. 103, 427
- *CHEMICAL ABSTRACTS,* 37640-57-6
- *CHEMICAL ABSTRACTS,* 7446-08-4